(19) Europäisches Patentamt

European Patent Office

Office européen des brevets

(11) **EP 1 329 162 B1**

(12) **EUROPEAN PATENT SPECIFICATION**

(45) Date of publication and mention
of the grant of the patent:
**05.07.2006 Bulletin 2006/27**

(51) Int Cl.:
*A23C 9/152* (2006.01)    *A23C 9/156* (2006.01)
*A23C 9/15* (2006.01)    *A01J 11/04* (2006.01)

(21) Application number: **03075184.6**

(22) Date of filing: **20.01.2003**

(54) **Foamable dairy product**

**Aufschäumbares Milchprodukt**

**Produit laitier moussable**

(84) Designated Contracting States:
**AT BE BG CH CY CZ DE DK EE ES FI FR GB GR
HU IE IT LI LU MC NL PT SE SI SK TR**
Designated Extension States:
**RO**

(30) Priority: **18.01.2002 NL 1019785**

(43) Date of publication of application:
**23.07.2003 Bulletin 2003/30**

(73) Proprietor: **Friesland Brands B.V.
8937 AC Leeuwarden (NL)**

(72) Inventors:
• **Van Hekezen, Maria Adriana
6715 EL Ede (NL)**
• **Wierstra, Jan
9051 EP Stiens (NL)**

(74) Representative: **van Westenbrugge, Andries et al
Nederlandsch Octrooibureau
P.O. Box 29720
2502 LS The Hague (NL)**

(56) References cited:
**EP-A- 0 418 593      EP-A- 0 853 890
WO-A-01/06867        BE-A- 877 941
DE-A- 3 425 284      DE-A- 4 407 361
DE-B- 1 201 314      FR-A- 2 423 163**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a dairy product that in particular can be used for preparing a froth for cappuccino and similar drinks.

There is a growing interest in special types of coffee, one of which is cappuccino. Cappuccino is a usually hot drink consisting of coffee or espresso having thereon a layer of frothed, usually hot milk prepared from milk or powdered milk, some of the milk draining out of the froth and mixing with the coffee. These special types of coffee are being drunk by an increasing number of consumers, mainly still outside the home. There is a growing requirement amongst consumers to be able to consume special types of coffee, including cappuccino, at home as well. However, the consumer usually does not possess the expensive equipment that is used in catering establishments for the preparation of cappuccino and in which use is usually made of steam, for example by means of a steam pipe or using the cappuccinotore.

The consumer does have simpler steam-free systems at home for preparing the froth for cappuccino, for example the traditional combination of pan and whisk or the more recent so-called milk frother and Aero-latte™. In combination with said simpler systems available for frothing, the milk that is currently available on the consumer market gives inadequate results, both with regard to frothing characteristics and with regard to taste.

In the systems proposed to date for obtaining a froth for use on drinks and the like the starting material is usually a packaged product in which a gas or a gas-forming agent has been incorporated. In EP 1 042 960 and EP 1 064 850 a pulverulent cappuccino creamer is described that can provide improved froth characteristics as a consequence of the addition of partially denatured whey protein in addition to the use of a carbonated reagent or as a consequence of the use of a gas-treated maltodextrin. Creamers of this type, that is to say with incorporated gas or gas-forming agent, are also described in EP 1 074 181, WO 01/08504, WO 98/34495, WO 97/33482, WO 96/08153 and EP 0 796 562. With these creamers the gas is released when the powder comes into contact with a liquid phase. The consumer usually regards the use of these pulverulent products for the preparation of cappuccino as not being genuine, since the frothing is not effected from a liquid milk and does not take place in the manner characteristic of cappuccino.

In EP 1 034 703 a liquid milk product is described that is packaged under pressure and in which nitrous oxide or nitrogen has been incorporated, a head being produced on the product at the point in time when the pack is opened. Such a product is suitable only for instant drinks. With this product the consumer has no influence on the nature and composition of the drink itself.

WO 01/06867 relates to the preparation of frothing enzymatic, hydrolysed whey proteins for use in bakery products and whipped topping. The rise in a solution containing 8 % whey protein concentrate increases from ≈ 300 % to ≈ 1,700 % as a result. The hydrolysed whey proteins are obtained by enzymatic treatment with proteases of *Bacillus licheniformis* and have a degree of hydrolysis (DH) of 4 - 10 %. Use in drinks is not mentioned.

DE 4407361-A1 discloses a mixture for producing a drink having a cream topping, such as cappuccino. The drink is produced by providing a dry mixture of coffee extract, coffee creamer (soy protein), sweetener, and a gas-producing agent, which, upon contact with water, produces an instant coffee-like liquid with cream topping.

FR 2423163-A describes frothed icy dessert products like ice cream or yoghurt, which may contain hydrolysed whey proteins. DE 3425284-A1 discloses milk shakes which contain thickeners (guar, carrageenan, xanthan) for obtaining sufficient rise, and may also contain hydrolysed casein (e.g. 0.3 %) as a frothing agent. EP 0853890-A1 describes an infant food also containing hydrolysed whey protein.

A recipe and a method of preparation have now been found for a milk that is suitable for use in steam-free milk frothers, it being possible to heat the milk with the aid of a hotplate (gas, electric, ceramic or induction) or in the microwave in order to prepare a hot milk froth. If desired the milk froth can also be used cold on the coffee.

The invention therefore relates to a dairy product that is suitable for frothing by mechanical treatment and that is characterised in that it contains the customary milk components. comprising milk fat, with protein, minerals, and lactose, wherein the amount of milk protein is 2,0-5,0% (m/m) and/or the amount of lactose is 3,0-5,0% (m/m) and/or the amount of minerals is 0,3-0,7% (m/m), and which further contains 04-1.2 % (m/m) hydrolysed milk protein, comprising at least 80% hydrolyzed casein.

Customary milk components are understood to be the dry components of skimmed, semi-skimmed or full fat milk, in particular 0.05 - 5.0 % (m/m) fat, 2.0 - 5.0 % (m/m) milk protein, 3.0 - 5.0 % (m/m) lactose and 0.3 - 0.7 % (m/m) mineral constituents, including salts, based on the total volume of the milk. The milk components can also be defined on the basis of solids content. The composition is then usually as follows: 0.5 - 35 % (m/m) fat, 15 - 50 % (m/m) milk protein, 25 - 50 % (m/m) lactose and 2 - 7 % (m/m) mineral constituents. In this case the dry mixture contains 2 - 20 %, preferably 4 - 12 % (m/m) of the hydrolysed milk protein.

The hydrolysed milk protein has preferably been hydrolysed enzymatically. The milk protein is enriched in casein, that is to say it consists of 80 - 100 % casein (caseinates). Most preferentially, the protein source consists of 85 - 100 % casein. In addition to other milk proteins, limited amounts of other proteins such as soy protein, can also be present. Insofar as other proteins are used, these preferably have a low cysteine/cystine content, in particular of below 3 % and preferably below 1 %.

The protein has preferably been hydrolysed in such a way that the peptides in the hydrolysed product have an average chain length of between 5 and 50, in particular between 8 and 25. This signifies a degree of hydrolysis of preferably 2 - 20 %, most preferentially of 4 - 12 % and very particularly of 5 - 10 %. Here the degree of hydrolysis is expressed as the AN/TN ratio, where AN denotes amino-terminal nitrogen and TN total nitrogen. A more detailed calculation of the degree of hydrolysis of proteins can be found in EP 0 811 056. The hydrolysis preferably takes place enzymatically, it being possible to use the customary proteolytic enzymes, such as trypsin, papain, pancrease and more specific proteases, in particular of microbial origin. The hydrolysis conditions (temperature, pH, concentrations and the like) are adapted in a manner known per se to the desired degree of hydrolysis, it being possible to monitor the degree of hydrolysis by determining the various nitrogen contents as referred to above. The hydrolysis reaction is then terminated in a known manner, for example by separating off or inactivating the proteolytic enzyme.

The hydrolysed protein can be combined with the other components of the milk in any suitable manner. For example, a concentrate or a dry form of the hydrolysed protein is added and mixed.

The dairy product according to the invention can be a low-fat product. In this case the content of, for example, milk fat is 0.05 - 1.5 % (m/m). The dairy product then preferably also contains 0.1 - 2.0 % (m/m) fat substitute. Fat substitutes that can be used for this purpose are the customary materials, in particular oligosaccharides and polysaccharides, such as dextrins, modified starch (for example tapioca), inulin, pectin, carrageenan and variants and derivatives thereof.

The dairy product can also contain auxiliaries, such as preservatives, emulsifiers, sweeteners, colourants, flavourings, such as milk flavouring, and the like. The addition of thickeners usually does not offer any significant advantages and preferably the product therefore also contains less than 0.1 % guar, xanthan and/or carrageenan and the like.

The dairy product can be a dried or concentrated dairy product that after reconstitution with water is suitable for frothing by mechanical treatment. It can then be packaged as a concentrate or in powder form. It is also possible to pack the dairy product in an aerosol. If desired, the product is sterilised or pasteurised after preparation.

The invention also relates to a method for preparing a froth based on milk, wherein the dairy product as described above or, after reconstitution with water, the concentrated or dry dairy product as described above, is subjected to shear forces and, if desired, is heated before, during or after subjecting to shear forces. Conventional beaters, shakers, frothers or mixers, preferably those suitable for domestic use, can be used for this purpose.

For example, the "cappuccinotore" widely used in catering establishments can be used for the preparation. With this equipment steam under pressure is mixed intensively with milk and air in a mixing chamber and in this way froth is formed and the milk is heated. In addition, the catering industry also uses a steam pipe, the steam outlet orifice being held below the liquid level of the milk. The steam heats the milk and froth is also produced as a result of the introduction of air.

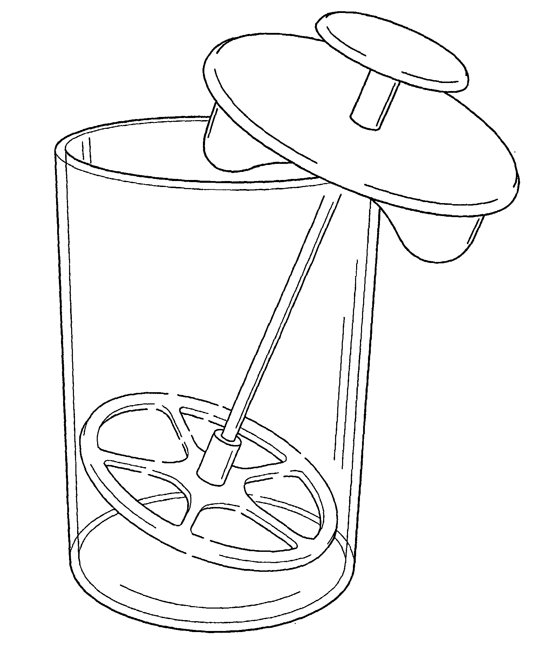

Alternatives for domestic use are traditionally the pan and whisk, milk being beaten whilst heating. In addition, nowadays use is increasingly being made of the so-called milk frother, as shown in the appended figure. To prepare the milk froth a 1 litre milk frother is filled with, for example, 250 ml milk. The milk is successively beaten by hand using the beater and heated in the microwave to the desired temperature (usually 50 - 80°C) or in the reverse order (first heating, then beating). There are also milk frothers that can be heated on gas or by electricity.

A simple alternative to the milk frother is a 500 ml shaker with a lid, in which, for example, 100 ml milk is heated in the microwave to the desired temperature (50 - 80°C) after which the shaker is shaken vigorously, or vice versa (first shaken and then heated).

A wide variety of electric mixers can also be used. A relatively new system is the Aero-latte™. This is an apparatus with a rod, the end of which is formed by a circular spiral of thin metal wire with a diameter of ≈ 2 cm, the mode of operation of which can be compared to that of the whisk of the mixer.

As an alternative, frothing can be carried out with the aid of a propellant gas. For this purpose the milk according to the invention is packaged in an aerosol in the presence of a customary propellant gas, such as nitrogen, nitrous oxide, carbon dioxide, lower alkanes, fluoroalkanes or ethers, as mentioned above. When the milk is dispensed this is then converted immediately into the froth form as a result of the action of the propellant gas. Any heating then preferably takes place after frothing.

The invention also relates to a method for preparing cappuccino and similar froth-containing drinks, wherein the milk froth obtained using the method referred to above is added to a coffee-containing or other drink. In general this is effected by simply pouring on the desired quantity.

Cocoa can be sprinkled on the milk froth of cappuccino for decoration and taste. With the known froth products this addition of cocoa results in the collapse of the froth, especially in the case of skimmed milk. Use of a suitable, preferably anionic emulsifier known per se results in increased stability of the froth, inter alia with respect to cocoa or other fat components. The emulsifier can be present in an amount of preferably 0.05 - 0.5 % (m/m), based on the liquid end product.

Examples of recipes according to the invention are as follows:

Recipe for skimmed cappuccino milk:

- skimmed milk (0.1 % fat)
- 0.5 % hydrolysed milk protein (Hygel 8293, from Quest)
- 0.5 % maltodextrin (fat substitute based on starch) (N-oil II, from National Starch)
- Optionally a flavouring can be added (with the taste of milk or with precisely a different taste, for example amaretto).

Recipe for full fat cappuccino milk:

- full fat milk (3.5 % fat)
- 1 % hydrolysed milk protein (Hygel 8293, from Quest)
- Optionally a flavouring can be added (with the taste of milk or with precisely a different taste, for example amaretto).

The frothing effect can be determined on the basis of the rise, that is to say the volume of the froth compared with the volume of the liquid from which the froth was formed; this can be shown by the following equation:

$$\text{Rise} = \frac{(V(\text{froth}) - V(\text{milk}))}{V(\text{milk})} * 100\%$$

V(milk) is the volume of the milk before frothing and V(froth) the volume of the frothed milk.

The stability of the froth can be expressed on the basis of the following equation:

$$\text{Stability} = \frac{(V(\text{froth} + 15) - V(\text{milk}))}{V(\text{milk})} * 100\%$$

Here V(milk) is the volume of the milk before frothing and V(froth+15) the volume of the frothed milk after 15 minutes.

**Example 1:**

Various types of milk were heated to 50°C in a water bath and then frothed using the milk frother. It can be seen from the table below that the product containing a hydrolysed milk protein (Hygel) has an improved rise and stability compared with the products without hydrolysed protein.

|  | Additive | Rise (%) | Stability (%) |
|---|---|---|---|
| Skimmed milk | 0.5%Hygel 0.5 % N-Oil/II | 132 ± 5 | 117 ± 5 |
| Full fat milk | 0.75 % Hygel | 122 ± 3 | 106 ± 6 |
| Full fat milk | 1 % Hygel | 141 ± 5 | 126 ±8 |
| Long life full fat* | No additive, as available commercially | 98 ± 6 | 65 ± 7 |
| Long life semi-skimmed* | No additive, as available commercially | 78 ± 13 | 63 ± 9 |
| Fresh full fat** | No additive, as available commercially | 73 ± 3 | 35 ± 12 |
| Fresh semi-skimmed** | No additive, as available commercially | 40 ± 5 | 23 ± 5 |

**Example 2:** *Organoleptic assessment with and without flavouring*

Addition of a milk flavouring can improve the organoleptic assessment of both skimmed milk and full fat milk. After adding various flavourings the overall rating rises from 7.0 to 7.6 for the cappuccino with skimmed milk and from 7.5 to 8.0 (scale 3 - 9) in the case of full fat milk. In the case of skimmed milk the coffee odour and the strength of the coffee taste decreases and the creaminess increases and the assessment of the taste improves. In the case of full fat milk only marginal changes in the individual attributes were demonstrated despite a clear rise in the overall rating. Various flavourings were tested, from which it can be seen that the flavourings with the best taste for skimmed milk differ from the flavourings with the best taste for full fat milk.

### Claims

1. Dairy product that is suitable for frothing by mechanical treatment, which contains the customary milk components comprising milk fat, milk protein, minerals, and lactose, wherein the amount of milk protein is 2.0 - 5.0 % (m/m) and/or the amount of lactose is 3.0 - 5.0 % (m/m) and/or the amount of minerals is 0.3 - 0.7 % (m/m), and which further contains 0.4 - 1.2 % (m/m) hydrolysed milk protein, comprising at least 80% hydrolysed casein.

2. Dairy product according to Claim 1, wherein the customary milk components comprise 0.05 - 5.0 % (m/m) fat, 2.0 - 5.0 % (m/m) milk protein, 3.0- 5.0 % (m/m) lactose and 0.3 - 0.7 % (m/m) minerals.

3. Dairy product according to Claim 1 or 2, **characterised in that** the hydrolysed milk protein has been hydrolysed enzymatically.

4. Dairy product according to one of Claims 1 - 3, **characterised in that** the milk fat content is 0.05 - 1.5 % (m/m).

5. Dairy product according to Claim 4, **characterised in that** the dairy product also contains 0.1 - 2.0 % (m/m) of a polysaccharide as fat substitute.

6. Dairy product according to one of Claims 1 - 5, **characterised in that** the dairy product also contains a flavouring.

7. Dairy product according to one of Claims 1 - 6, **characterised in that** the dairy product also contains 0.05 - 0.5 % of an emulsifier.

8. Dairy product according to one of Claims 1 - 7, **characterised in that** it contains less than 0.1 wt.% of thickeners selected from guar, xanthan and carrageenan.

9. Dried or concentrated dairy product that, after reconstitution with water, is suitable for frothing by mechanical treatment, **characterised in that** it contains the customary dry milk components plus 4-12 % (m/m) hydrolysed milk protein based on the solids content, the hydrolysed milk protein comprising at least 80% hydrolysed casein.

10. Dried or concentrated dairy product according to Claim 9, wherein the customary dry milk components comprise 0.5 - 35 % (m/m) fat, 15 - 50 % (m/m) milk protein, 25 - 50 % (m/m) lactose and 2 - 7 % (m/m) mineral constituents.

11. Packaged dairy product for the preparation of a froth based on milk, **characterised in that** the dairy product according to one of Claims 1 - 8 is packed in an aerosol with a propellant gas, frothing being able to take place with the aid of the propellant gas.

12. A method for preparing a froth based on milk, **characterised in that** the dairy product according to one of Claims 1 - 8 or, after reconstitution with water, the dairy product according to Claim 9 or 10 is subjected to shear forces and, if desired, heated before, during or after subjecting to shear forces.

13. A method for preparing cappuccino, **characterised in that** the froth obtained using the method according to Claim 12 is added to a coffee-containing drink.

### Patentansprüche

1. Molkereiprodukt, das sich zum Schäumen durch mechanische Behandlung eignet, welches die üblichen Milchkomponenten umfassend Milchfett, Milchprotein, Mineralien und Lactose enthält, wobei die Menge an Milchprotein 2,0 bis 5,0% (m/m) ist und/oder die Menge an Lactose 3,0 bis 5,0% (m/m) ist und/oder die Menge an Mineralien 0,3 bis 0,7% (m/m) ist und das ferner 0,4 bis 1,2% (m/m) hydrolysiertes Milchprotein umfassend mindestens 80% hydrolysiertes Casein enthält.

**2.** Molkereiprodukt nach Anspruch 1, wobei die üblichen Milchkomponenten 0,05 bis 5,0% (m/m) Fett, 2,0 bis 5,0% (m/m) Milchprotein, 3,0 bis 5,0% (m/m) Lactose und 0,3 bis 0,7% (m/m) Mineralien umfassen.

**3.** Molkereiprodukt nach Anspruch 1 oder 2, **dadurch gekennzeichnet, dass** das hydrolysierte Milchprotein enzymatisch hydrolysiert worden ist.

**4.** Molkereiprodukt nach einem der Ansprüche 1 bis 3, **dadurch gekennzeichnet, dass** der Milchfettgehalt 0,05 bis 1,5% (m/m) ist.

**5.** Molkereiprodukt nach Anspruch 4, **dadurch gekennzeichnet, dass** das Molkereiprodukt auch 0,1 bis 2,0% (m/m) eines Polysaccharids als Fettersatz enthält.

**6.** Molkereiprodukt nach einem der Ansprüche 1 bis 5, **dadurch gekennzeichnet, dass** das Molkereiprodukt auch einen Geschmacksstoff enthält.

**7.** Molkereiprodukt nach einem der Ansprüche 1 bis 6, **dadurch gekennzeichnet, dass** das Molkereiprodukt auch 0,05 bis 0,5% eines Emulgators enthält.

**8.** Molkereiprodukt nach einem der Ansprüche 1 bis 7, **dadurch gekennzeichnet, dass** es weniger als 0,1 Gew.-% Verdickungsmittel ausgewählt aus Guar, Xanthan und Carrageen enthält.

**9.** Getrocknetes oder konzentriertes Molkereiprodukt, das nach Wiederherstellung mit Wasser sich zum Schäumen durch mechanische Behandlung eignet, **dadurch gekennzeichnet, dass** es die üblichen Trockenmilchkomponenten plus 4 bis 12% (m/m) hydrolysiertes Milchprotein auf Basis des Feststoffgehalts enthält, wobei das hydrolysierte Milchprotein mindestens 80% hydrolysiertes Casein umfasst.

**10.** Getrocknetes oder konzentriertes Molkereiprodukt nach Anspruch 9, wobei die üblichen Trockenmilchkomponenten 0,5 bis 35% (m/m) Fett, 15 bis 50% (m/m) Milchprotein, 25 bis 50% (m/m) Lactose und 2 bis 7% (m/m) Mineralbestandteile umfassen.

**11.** Verpacktes Molkereiprodukt zur Herstellung eines Schaums auf Basis von Milch, **dadurch gekennzeichnet, dass** das Molkereiprodukt nach einem der Ansprüche 1 bis 8 in einem Aerosol mit einem Treibgas gepackt ist, wobei die Schaumbildung mit Hilfe des Treibgases erfolgen kann.

**12.** Verfahren zur Herstellung eines Schaums auf Basis von Milch, **dadurch gekennzeichnet, dass** das Molkereiprodukt nach einem der Ansprüche 1 bis 8 oder nach Wiederherstellung mit Wasser das Molkereiprodukt nach Anspruch 9 oder 10 Scherkräften unterworfen wird und, falls gewünscht, erwärmt wird, bevor, während oder nachdem es Scherkräften unterworfen wird.

**13.** Verfahren zur Herstellung von Cappuccino, **dadurch gekennzeichnet, dass** der Schaum, der durch Verwendung des Verfahrens nach Anspruch 12 erhalten wird, einem Kaffee enthaltenden Getränk zugegeben wird.

**Revendications**

**1.** Produit laitier capable d'être rendu moussant par un traitement mécanique et qui contient les composants habituels du lait comprenant les matières grasses du lait, les protéines de lait, les minéraux et le lactose, dans lequel la quantité de protéines de lait est de 2,0 - 5,0 % (m/m) et/ou la quantité de lactose est de 3,0 - 5,0 % (m/m) et/ou la quantité de minéraux est de 0,3 - 0,7 % (m/m) et qui, de plus, contient 0,4 - 1,2 % (m/m) de protéines de lait hydrolysées, comprenant au moins 80 % de caséine hydrolysée.

**2.** Produit laitier selon la revendication 1, dans lequel les composants de lait habituels comprennent 0,05 - 5,0 % (m/m) de matières grasses, 2,0 - 5,0 % (m/m) de protéines de lait, 3,0 - 5,0 % (m/m) de lactose et 0,3 - 0,7 % (m/m) de minéraux.

**3.** Produit laitier selon la revendication 1 ou 2, **caractérisé en ce que** la protéine de lait hydrolysée a été hydrolysée par voie enzymatique.

**4.** Produit laitier selon l'une des revendications 1 - 3, **caractérisé en ce que** la teneur en matières grasses du lait est de 0,05 - 1,5 % (m/m).

**5.** Produit laitier selon la revendication 4, **caractérisé en ce que** le produit laitier contient également 0,1 - 2,0 % (m/m) d'un polysaccharide en tant que remplaçant des matières grasses.

**6.** Produit laitier selon l'une des revendications 1 à 5, **caractérisé en ce que** le produit laitier contient également un agent de saveur.

**7.** Produit laitier selon l'une des revendications 1 à 6, **caractérisé en ce que** le produit laitier contient également 0,05 - 0,5 % d'un émulsifiant.

**8.** Produit laitier selon l'une des revendications 1 à 7, **caractérisé en ce qu'**il contient moins de 0,1 % en poids d'agents épaississants choisis à partir de guar, xanthane et carraghénine.

**9.** Produit laitier séché ou concentré qui, après reconstitution avec de l'eau, peut être rendu moussant par un traitement mécanique, **caractérisé en ce qu'**il contient les composants habituels secs du lait plus 4 - 12 % (m/m) de protéine de lait hydrolysée, rapportée à la teneur en matières solides, la protéine de lait hydrolysée comprenant au moins 80 % de caséine hydrolysée.

**10.** Produit laitier séché ou concentré selon la revendication 9, dans lequel les composants habituels de lait sec comprennent 0,5 - 35 % (m/m) de matières grasses, 15 - 50 % (m/m) de protéine de lait, 25 - 50 % (m/m) de lactose et 2 - 7 % (m/m) de constituants minéraux.

**11.** Produit laitier conditionné pour la préparation d'un produit moussant à base de lait, **caractérisé en ce que** le produit laitier selon l'une des revendications 1 - 8 est emballé dans un aérosol avec un gaz propulseur, le moussage pouvant s'effectuer à l'aide du gaz propulseur.

**12.** Procédé pour la préparation d'un produit moussant à base de lait, **caractérisé en ce que** le produit laitier selon l'une des revendications 1 - 8 ou, après reconstitution avec de l'eau, le produit laitier selon la revendication 9 ou 10 est soumis à des forces de cisaillement et, au besoin, chauffé avant, pendant ou après avoir été soumis aux forces de cisaillement.

**13.** Procédé pour préparer un capuccino, **caractérisé en ce que** le produit moussant obtenu en utilisant le procédé selon la revendication 12 est ajouté à une boisson contenant du café.